(19) Europäisches Patentamt
European Patent Office
Office européen des brevets

(11) Publication number: **0 004 356**
**B1**

(12) **EUROPEAN PATENT SPECIFICATION**

(45) Date of publication of patent specification: **15.12.82**

(51) Int. Cl.³: **C 08 G 18/48,**
C 08 G 65/30, D 01 F 6/70

(21) Application number: **79100809.7**

(22) Date of filing: **16.03.79**

(54) **Polyurethanes prepared with tetrahydrofuran-alkylene oxide polymerizates having low oligomeric cyclic ether content, processes for preparing the same, and articles and fibers of the polyurethanes.**

(30) Priority: **16.03.78 US 887332**
**16.03.78 US 887333**
**13.06.78 US 915190**
**13.06.78 US 915191**
**27.11.78 US 962311**
**11.12.78 US 966602**
**12.12.78 US 967082**
**21.12.78 US 970733**

(43) Date of publication of application:
**03.10.79 Bulletin 79/20**

(45) Publication of the grant of the patent:
**15.12.82 Bulletin 82/50**

(84) Designated Contracting States:
**DE FR GB IT NL**

(56) References cited:
**DE - A - 2 709 280**
**GB - A - 854 958**
**GB - A - 1 175 395**
**US - A - 3 425 999**
**US - A - 4 071 492**

(73) Proprietor: **E.I. DU PONT DE NEMOURS AND COMPANY**
**Legal Department 1007 Market Street**
**Wilmington Delaware 19898 (US)**

(72) Inventor: **Pruckmayr, Gerfried**
**221 Foxcatcher Lane**
**Media Pennsylvania 19063 (US)**
Inventor: **Robinson, Ivan Maxwell**
**1805 Shipley Road**
**Wilmington Delaware 19803 (US)**
Inventor: **Pechhold, Engelbert**
**R.D. 2, Box 167**
**Chadds Ford Pennsylvania 19317 (US)**

(74) Representative: **Abitz, Walter, Dr.-Ing. et al,**
**Abitz, Morf, Gritschneder P.O. Box 86 01 09**
**D-8000 München 86 (DE)**

(56) References cited:
**MACROMOLECULES, Vol. 11, No. 1, January—February 1978 Easton, USA G. PRUCKMAYR et al. "Macrocyclic Tetrahydrofuran Oligomers" pages 265 to 270**

**The file contains technical information submitted after the application was filed and not included in this specification**

**EP 0 004 356 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Polyurethanes prepared with tetrahydrofuran- alkylene oxide polymerizates having low oligomeric cyclic ether content, processes for preparing the same, and articles and fibers of the polyurethanes

## Technical field

This invention relates to polyurethanes which are reaction products of (1) a polymerizate of tetrahydrofuran (THF) and an alkylene oxide (AO), (2) an organic polyisocyanate and (3) an aliphatic polyol or a polyamine chain extender. It is more particularly directed to such polyurethanes prepared with THF/AO polymerizates which contain no more than 3%, preferably no more than 1% by weight, of oligomeric cyclic ethers.

## Background art

THF/AO polymerizates are known and have been used in the preparation of polyurethanes, as shown, for example, in U.S. Patent 3,425,999 to Axelrood and Lajiness and U.S. Patent 4,071,492 to Bethea and Futamura. The polymerizates shown in these patents contain as much as 7—10%, by weight, of oligomeric cyclic ether byproducts. When such polymerizates are used in preparing polyurethanes, the presence of the cyclic ether byproducts tends to degrade the polyurethane's properties. This degradation manifests itself in much the same way as that encountered when an excess of plasticizer is used: the lower molecular weight cyclic ethers vaporize slowly at elevated temperatures and are leached out by water and common organic liquids, which results in weight loss and undesirable dimensional changes.

These undesirable effects are at a minimum in the polyurethanes of the invention, which are prepared with THF/AO polymerizates which contain no more than about 3%, by weight, of oligomeric cyclic ethers.

## Disclosure of the invention

The THF/AO copolymers in the polymerizates used to prepare the polyurethanes of the invention contain 2—70%, by weight, of AO units, preferably 30—50%. The copolymers have number average molecular weights of 500—5000, preferably 650—2000, and have hydroxyl functionalities of 2.0—4.0, preferably 2.0. Mixtures of such polymerizates can also be used.

Number average molecular weight is determined by first determining the hydroxyl number of the copolymer by titration with acetic anhydride according to ASTM-D-1638 and then converting this number to number average molecular weight according to the formula

$$\text{Molecular weight} = \frac{56{,}100 \times n}{\text{hydroxyl number}}$$

where n is the hydroxyl functionality of the copolymer.

The THF/AO polymerizate used to prepare the polyurethanes of the invention can be made by reducing the oligomeric cyclic ether content of a conventional THF/AO polymerizate by bringing the polymerizate into contact with a cationic exchange resin. The resin can be any acidic cationic ion exchange resin bearing —$SO_3H$ groups and insoluble in the reaction medium in which it is being used. "Insoluble" means that the amount of resin which dissolves in the medium under process conditions will give the treated polymerizate an acid number of no greater than 0.05 mg of KOH per gram.

The nature of the "backbone" of the resin is unimportant. The most common commercially available resins of this type have backbones which are crosslinked copolymers of styrene and divinyl benzene, but resins having other backbones can be used. Preferred among the styrene/divinyl benzene resins, and preferred for use in practicing the invention, is one sold by the Rohm & Haas Company of Philadelphia, Pennsylvania, as Amberlyst® 15. This macroreticular resin has an initial hydrogen ion concentration of about 4.9 milliequivalents per gram (dry), an initial surface area of 40—50 square meters per gram, an initial porosity of 0.3—0.35 milliliter of pore per milliliter of bead, and an initial average pore diameter of 0,02—0,06 $\mu$m. These values tend to change somewhat as the resin is used.

Illustrative of an ion exchange resin having a backbone other than a crosslinked copolymer of styrene and divinyl benzene is one sold by E. I. du Pont de Nemours and Company as Nafion® perfluorosulfonic acid resin. This resin is a copolymer of tetrafluoroethylene and a monomer represented by the structure

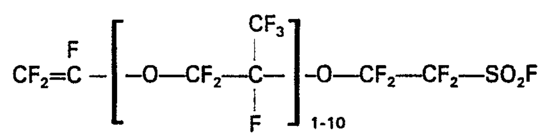

These copolymers are prepared in the sulfonyl fluoride form and are then hydrolyzed to the acid form, as described in U.S. Patent 3,692,569.

The ion exchange resins having styrene/divinyl benzene copolymer backbones are preferably pretreated before use as follows:

1. The resin is placed in a column, backwashed with water, allowed to settle and then drained.
2. Two bed-volumes of 2N HCl are run through the resin over a twenty-minute period.
3. The acid is washed from the resin with five bed-volumes of water. At the end of the cycle, water is drained from the resin until a 2.5 cm head remains at the top level of the bed.
4. Two bed-volumes of 1.5N NaOH are run through the resin over a twenty-minute period.

5. The base is washed from the resin with five bed-volumes of deionized water. At the end of the cycle, water is drained from the resin until a 2.5 cm head remains at the top level of the bed.

6. Steps 1 and 2 are repeated.

7. The resin is washed with boiling water for one-half hour. Two bed-volumes of a 1:1 (volume) mixture of methanol and water are then run through the bed.

8. The resin is dried.

Once pretreated, and with periodic regeneration according to well-known methods, the resin can be used indefinitely, although long use may cause attrition of the resin or color formation and make its use impractical. The use of fresh catalyst is therefore preferred.

The process of preparing the polymerizate is begun by adding to a raw THF/AO polymerizate 0.5—25%, preferably 3—7%, by weight of the polymerizate, of the ion exchange resin. The resulting reaction mass is continuously agitated and brought to a temperature of 60—150°C, preferably 90—110°C, and held there, preferably under a vacuum of 13.3 kilopascals (100 mm of Hg) or less, with agitation, until its oligomeric cyclic ether content has been brought down to the desired level.

The time required to reach the desired oligomeric cyclic ether level varies with the original cyclic ether content of the polymerizate and the temperature at which the process is conducted, but normally that level will be reached in 1—4 hours, the higher process temperatures favoring shorter times.

When the process of preparing the THF/AO polymerizate is run at the preferred temperatures, THF, water and various byproducts are given off from the reaction mass. These substances can be withdrawn from the reaction zone by sweeping it with an inert gas such as nitrogen or by running the process under vacuum. The process can be run batchwise or in a continuous fashion. When run continuously, the process is preferably run in stages to avoid the adverse effects of backmixing, as is well-known in the art. In the continuous mode, the ion exchange resin is held in the reaction zone by suitable filters or screens. When the process is run batchwise, the liquid product is removed from the reaction vessel, preferably by decantation, leaving the resin behind. The vessel can then be refilled and a new reaction begun, using the original resin.

The ion-exchange method of reducing oligomeric cyclic ether content is described in greater detail in European Patent Application Serial No. 79100234.8.

The THF/AO polymerizates used according to the invention can also be prepared using alternative methods. For example, they can be prepared by subjecting polymerizates having high oligomeric cyclic ether content to molecular distillation, using conventional techniques, by extracting the ethers from the polymerizates with water using sequential washes and separations of the resulting aqueous and organic layers or using countercurrent extraction, or by bringing the polymerizate into contact with an acid-activated sodium or calcium montmorillonite clay.

The molecular distillation and water-extraction methods are described in greater detail in European Patent Application Serial No. 79100235.5 The montmorillonite clay method is described in European Patent Application Serial No. 79100810.

According to the process described in European Patent Application Serial No. 79100235, the oligomeric cyclic ether content of a THF/alkylene oxide polymerizate is brought to no more than 3%, preferably no more than 2%, even more preferably to the level at which no oligomeric cyclic ethers are detectable, by extracting the ethers from the polymerizate with water. This is done by mixing the polymerizate with water and then vigorously agitating the mixture. The temperature at which the extraction is performed is a matter of convenience. In general, the cyclic ethers are more soluble in cold water than in hot, and it is therefore preferred that the extraction be performed at a temperature of 15—40°C, even more preferably 15—30°C. If the raw polymerizate is too viscous to handle easily, it may be first dissolved in THF, or preferably, in a nonwater-soluble organic liquid such as xylene or toluene. The amount of water used varies with the water solubility of the cyclic ethers present, but generally enough water is used to provide a water/polymerizate volume ratio of 5—100/1, preferably 20—60/1. The water-polymerizate mixture is held at the selected temperature for 1—3 hours, preferably about 2 hours. Stirring is then stopped, whereupon the organic phase and water phase separate. The organic phase is then drawn off, and the extraction cycle is repeated, if necessary, until the oligomeric cyclic ether content of the polymerizate is brought to the 3% level. The oligomeric cyclic ether concentration can be reduced even below the 3% level; indeed, it can be reduced to below the threshold of detection by repeating the extraction cycle a sufficient number of times.

In an alternative method, the oligomeric cyclic ether content of a polymerizate can be brought to 3% or below by using the well-known principles of continuous countercurrent extraction, at the temperatures previously recommended for sequential extraction.

If the original oligomeric cyclic ether content of the raw polymerizate is high and the number of water extractions which must be performed to reduce the oligomeric cyclic ether content to 3%, by weight, or below is burdensome, the raw polymerizate can be first distilled to reduce its oligomeric cyclic ether content to about 5%. This distillation is done in conventional equipment, at a temperature of 95—250°C and a pressure of 13.3—665 Pa for 1—6 hours. The

distillation residue is then extracted with water, as previously described.

The process of the invention described in European Patent Application Serial No. 79100810 starts by bringing any catalyst grade sodium or calcium montmorillonite clay and the THF/alkylene oxide polymerizate into contact to form a reaction mixture which contains 1—50%, preferably 3—10%, by weight, of the clay. The mixture is continuously stirred and brought to a temperature of 70—150°C, preferably 80—120°C, and held there, preferably under a vacuum of 13.3 kilopascals (100 mm of Hg) or less, with agitation, until its oligomeric cyclic ether content has been brought to the desired level. The time required to reach the desired cyclic ether level varies with the original cyclic ether content of the polymerizate and the temperature at which the process is conducted, but normally that level will be reached in 1/2—10 hours, the higher process temperatures favoring shorter times.

The THF/AO polymerizates made according to the aforementioned methods contain no more than about 3%, by weight, of oligomeric cyclic ethers, preferably no more than about 2%, even more preferably no more than about 1%.

"Alkylene oxide", as used herein, means an alkylene oxide containing 2 or 3 carbon atoms in its ring. The AO can be unsubstituted or substituted with, for example, alkyl groups, aryl groups or halogen atoms. Illustrative of such alkylene oxides are ethylene oxide (EO), 1,2-propylene oxide (PO), 1,3-propylene oxide, 2,2 - bis - chloromethyl - 1,3 - propylene oxide, epichlorohydrin and styrene oxide. The polymerizates preferred for use in preparing the polyurethanes of the invention are the THF/ethylene oxide polymerizates and the THF/1,2 - propylene oxide polymerizates, especially those containing 30—50%, by weight of ethylene oxide or propylene oxide units.

"Oligomeric cyclic ether", as used herein, means a compound having a calculated molecular weight of no more than about 500 and containing two or more of the following units linked together in a ring:

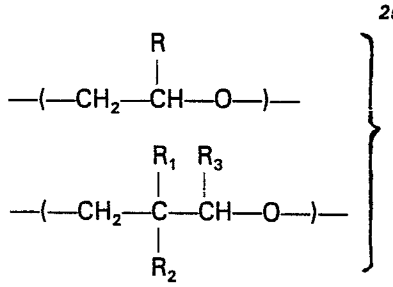

Units derived from AO

$-(-CH_2-CH_2-CH_2-CH_2-O-)-$ Unit derived from THF where R, $R_1$, $R_2$ and $R_3$ are hydrogen, methyl, ethyl or halomethyl.

Illustrative of such oligomeric cyclic ethers are those represented in the following table:

Composition—Number Ratio of AO Units to THF Units

| | |
|---|---|
| 2:1 | 1:4 |
| 1:2 | 3:3 |
| 3:1 | 5:2 |
| 2:2 | 2:4 |
| 4:1 | 4:3 |
| 1:3 | 6:2 |
| 3:2 | 3:4 |
| 5:1 | 5:3 |
| 2:3 | 2:5 |
| 4:2 | 4:4 |

Oligomeric cyclic ether (OCE) content is determined by programmed gas chromatography, using a stainless steel column having a length of 3.049 meters (10 feet) and an outside diameter of 3.175 mm (1/8 inch), packed with 5% by weight of "OV-101", a methyl silicone oil sold by Supelco, Inc., supported on 100—120 U.S.S. mesh (0,149—0,125 mm sieve opening) "Chromsorb G", sold by Hewlett-Packard, Inc. The column is in an oven whose temperature is programmed to rise from 70—300°C at the rate of 30°C per minute, with a 12 minute hold time at 300°C before the cycle is repeated, and has a glass liner for the injection port, which liner must be replaced frequently to prevent contamination of the port with nonvolatile fractions of sample. The instrument may be equipped with an integrator to determine the concentration of unknown in the sample. The determination is conducted under the following conditions:

| | |
|---|---|
| Injection port temperature | 280°C |
| Thermal conductivity detector setting | 320°C @150 milliamperes |
| Carrier gas @ gas flow | Helium @30 cubic centimeters per minute |
| Sample size | 10 microliters |
| Internal Standard | Dimethyl ether of triethylene glycol |

The procedure is standardized by first preparing three standard solutions containing, respectively, 2%, 5% and 10% by weight of purified OCE in tetrahydrofuran. A sample of each standard solution is then prepared by measuring into a sample bottle 1.00 gram of

the standard solution, 0.10 gram of the dimethyl ether of triethylene glycol and 10 ml of reagent grade toluene, and then shaking the bottle. Duplicates of each sample are injected in turn into the chromatograph, which is then run under the previously mentioned conditions.

The response factor (RF) of the determination is then calculated for each sample according to the equation

$$RF = \frac{(\%OCE \text{ in standard})(\text{area \% of internal standard}) \times (\text{weight of standard solution})}{(\text{area \% of OCE})(\text{weight of internal standard})(100)}$$

Average response factor, $RF_a$, is found by averaging the six response factors thus calculated.

The determination of OCE content is carried out by first preparing a sample of THF/alkylene oxide polymerizate of unknown OCE content by measuring into a sample bottle 1.00 gram of solvent-free polymerizate, 0.10 gram of internal standard and 10 ml of reagent grade toluene, and then shaking the bottle. The sample is then injected into the chromatograph which is then run under the previously mentioned conditions. OCE content is calculated from the results according to the equation

$$\text{Weight percent of OCE} = \frac{\text{area \% of OCE}}{\text{area \% of internal standard}} \times 10\, RF_a$$

Purified OCE is obtained by first distilling a raw THF/alkylene oxide polymerizate (the alkylene oxide being the same as that in the copolymer of the unknown) in a 5.08 cm (2-inch) Pope wiped film molecular still, sold by Pope Scientific, Inc., Menomonee Falls, Wisconsin. The distillation is carried out at 170—190°C and a pressure of less than about 26 Pa (0.2 mm of mercury), with an input rate of about 1 drop per second.

Two hundred parts by weight of the distillate are mixed with 60 parts by weight of 2,4-toluene diisocyanate and 3 drops of dibutyltin dilaurate and the mixture held at ambient temperature, with stirring, until the exothermic reaction subsides. The mixture is then held at 100°C for two hours, with stirring, and its free isocyanate content determined by titration with di-n-butylamine, as described in Analytical Chemistry of the Polyurethanes, Volume XVI, Part III, D. J. David and R. B. Staley, Wiley-Interscience, 1969, pages 357—359. Enough ethylene glycol to give an isocyanate/hydroxyl mole ratio of about 1/1 is added to the mixture, which is then brought to 100°C and held there for two hours, with stirring, to complete conversion to a polyurethane.

The resulting mixture containing the inert OCE is then extracted with diethyl ether and the extract concentrated on a rotary evaporator at 100°C and a pressure of about 1333 Pa (10 mm of mercury). The concentrate is then distilled in the Pope molecular still at 170—190°C and a pressure of less than about 26 Pa (0.2 mm of mercury) and an input rate of about 1 drop per second. The distillate is purified OCE.

The polyisocyanate used in preparing a polyurethane of the invention can be any one of the aliphatic or aromatic polyisocyanates ordinarily used to prepare polyurethanes. Illustrative are

2,4 - toluene diisocyanate
2,6 - toluene diisocyanate
hexamethylene - 1,6 - diisocyanate
tetramethylene - 1,4 - diisocyanate
cyclohexane - 1,4 - diisocyanate
naphthalene - 1,5 - diisocyanate
diphenylmethane - 4,4′ - diisocyanate
xylylene diisocyanate
dicyclohexylmethane - 4,4′ - diisocyanate
1,4 - benzene diisocyanate
3,3′ - dimethoxy - 4,4′ - diphenyl diisocyanate
m-phenylene diisocyanate
isophorone diisocyanate
polymethylene polyphenyl isocyanate
4,4′ - biphenylene diisocyanate
4 - isocyanatocyclohexyl - 4′ - isocyanatophenyl methane
p - isocyanatomethyl phenyl isocyanate

Mixtures of isocyanates can also be used.

The isocyanates preferred for use because of the desirable properties they confer on the polyurethane products are diphenylmethane - 4,4′ - diisocyanate and the toluene diisocyanates.

The chain extender used in preparing a polyurethane of the invention can be any one of the aliphatic polyols, or any one of the aliphatic or aromatic polyamines ordinarily used to prepare polyurethanes.

Illustrative of the aliphatic polyols which can be used as chain extenders are

1,4-butanediol
ethylene glycol
1,6-hexanediol
glycerine
trimethylolpropane
pentaerythritol
1,4-cyclohexane dimethanol
phenyl diethanolamine

Diols like hydroquinone bis(β - hydroxyethyl)ether, tetrachlorohydroquinone - 1,4 - bis(β - hydroxyethyl)ether and tetrachlorohydroquinone - 1,4 - bis(β - hydroxyethyl) - sulfide, even though they contain aromatic rings, are considered to be aliphatic polyols for purposes of the invention.

Aliphatic diols of 2—10 carbon atoms are

preferred. Especially preferred is 1,4 - butanediol. Mixtures of diols can also be used.

Illustrative of the polyamines which can be used as chain extenders are

p,p' - methylene dianiline and complexes thereof with alkali metal chlorides, bromides, iodides, nitrites and nitrates
4,4' - methylene bis(2 - chloroaniline)
piperazine
2 - methylpiperazine
oxydianiline
hydrazine
ethylenediamine
hexamethylenediamine
xylylenediamine
bis(p - aminocyclohexyl)methane
dimethyl ester of 4,4' - methylenedianthranilic acid
p - phenylenediamine
m - phenylenediamine
4,4' - methylene bis(2 - methoxyaniline)
4,4' - methylene bis(N - methylaniline)
2,4 - toluenediamine
2,6 - toluenediamine
benzidine
dichlorobenzidine
3,3' - dimethylbenzidine
3,3' - dimethoxybenzidine
dianisidine
1,3 - propanediol bis(p - aminobenzoate)
isophorone diamine

The amines preferred for use are 4,4' - methylene bis(2 - chloroaniline), 1,3 - propanediol bis(p - aminobenzoate) and p,p' - methylenedianiline and complexes thereof with alkali metal chlorides, bromides, iodides, nitrites and nitrates. Mixtures of amines can also be used.

The polyurethanes of the invention are prepared in two steps, the first of which is conducted under nitrogen at ambient pressure to prevent oxidation of the reactants and product, and to prevent exposure of the reaction mass to atmospheric moisture. In the first step, the THF/AO polymerizate starting material is dried by heating it at a temperature of 80—100°C under vacuum, and is then heated to 60—125°C, preferably 70—90°C, and held there while an excess over the stoichiometric amount, preferably twofold to tenfold, of organic diisocyanate is added, with stirring. The actual amount of isocyanate used depends on the molecular weight of the THF/AO polymerizate, as is well known in the art. The reaction mass is held for about 1—4 hours at 60—125°C, with stirring, and the free isocyanate content of the mass is then determined by titration with di - n - butylamine, as described in Analytical Chemistry of the Polyurethanes, Volume XVI, Part III, D. J. David and H. B. Staley, Wiley-Interscience, 1969, pages 357—359.

In the second step, an amount of polyamine or polyol chain extender calculated to give an isocyanate/hydroxyl or amine mole ratio of 0.9—1.1 to 1 in the reaction mass, preferably 1.05 to 1, is degassed at about 30—120°C and a pressure of 1333—6666 Pa and quickly added to the reaction mass.

The reaction mass is held with stirring at 60—130°C until it is homogeneous, which normally takes 1—5 minutes. The mass is then poured into molds, preferably preheated to 100—120°C, and then cured at 100—120°C at a pressure of 1,700—2,200 kilopascals for from 5 minutes to several hours. The casting is then cooled, removed from the mold, aged for about one week at ambient temperature, and is then ready for use.

The polyurethanes of this invention can also be made by reaction-injection and liquid-injection molding techniques, whereby the starting materials are simultaneously injected and mixed in a mold, preferably together with such a conventional polyurethane catalyst as dibutyltin dilaurate or stannous octoate, and then subjected to pressures ranging from ambient to several thousand kilopascals and temperatures ranging from ambient to 150°C. Use of a foaming agent such as a fluorocarbon or water is optional.

Examples

In the Examples, all parts and percentages are by weight.

Example 1 (Best mode)

(A) The oligomeric cyclic ether content of a THF/EO polymerizate having an EO content of 42% was reduced to 0.75% by treatment with Amberlyst® 15 resin. The number average molecular weight of the resulting polymerizate was 944. This polymerizate, 94.4 parts, was charged with a polymerization kettle and dried by heating it at 80°C for 30 minutes at a pressure of 1300—2000 Pa.

The dried polymerizate was then heated to 80°C and held at that temperature while 62.8 parts of melted, filtered diphenylmethane - 4,4' - diisocyanate were quickly added thereto. The kettle was then purged with nitrogen and the reaction mass held at 80°C for two hours, with stirring, to give a liquid product having a free isocyanate content of 8.12%, as determined by the di - n - butylamine titration technique.

This liquid product, 150 parts, was then heated at 80°C for 30 minutes at a pressure of 1333 Pa (10 mm of Hg) to remove entrapped air.

(B) 1,4 - Butanediol, 12.43 parts (which gave an isocyanate/hydroxyl mole ratio of 1.05/1), was heated to 70°C and then quickly added, with rapid stirring, to the product of (A) held at 80°C. The reaction mixture was maintained at 80°C, with stirring, until it became homogeneous.

The mixture was poured into molds preheated to 110°C, which were then pressed in a platen press at 110°C and a platen pressure of 2,155 kilopascals (312 psi) for 17 hours. The resulting elastomeric material was held for one week at ambient temperature and was then ready for use.

Example 2

(A) The oligomeric cyclic ether content of a THF/EO polymerizate having an EO content of 36% was reduced to 1.1% by treatment with Amberlyst® 15 resin. The number average molecular weight of the resulting polymerizate was 2603. This polymerizate, 130.1 parts, was charged to a polymerization kettle and dried by heating it at 80°C for one hour at a pressure of 1300—2000 Pa.

The dried polymerizate was then held at 80°C while 58.7 parts of melted, filtered diphenylmethane - 4,4' - diisocyanate were quickly added thereto. The kettle was then purged with nitrogen and the reaction mass held at 80°C for two hours, with stirring, to give a liquid product having a free isocyanate content of 8.1%, as determined by the di - n - butylamine titration technique. This liquid product, 150 parts, was then heated at 80°C for 30 minutes at a pressure of 1333 Pa (10 mm of Hg) to remove entrapped air.

(B) 1,4 - Butanediol, 12.4 parts (which gave an isocyanate/hydroxyl mole ratio of 1.05/1) was heated to 80°C and then quickly added, with rapid stirring, to the product of (A) held at 80°C. The reaction mixture was maintained at 80°C, with stirring, until it became homogeneous.

The mixture was then poured into molds and cured as shown in Example 1.

Example 3

(A) The oligomeric cyclic ether content of a THF/EO polymerizate having an EO content of 37% was reduced to 2.2% by treatment with Amberlyst® 15 resin. The number average molecular weight of the resulting polymerizate was 1099. This polymerizate, 109.9 parts, was charged to a polymerization kettle and dried by heating it at 80°C for 30 minutes at a pressure of 1300—2000 Pa (10—15 mm of Hg).

The dried polymerizate was then heated to 110°C and held at that temperature while 66.3 parts of melted, filtered diphenylmethane - 4,4' - diisocyanate were quickly added thereto. The kettle was then purged with nitrogen and the reaction mass held at 110°C for two hours, with stirring, to give a liquid product having a free isocyanate content of 7.84%, as determined by the di - n - butylamine titration technique.

This liquid product, 150 parts, was then heated at 110°C for 30 minutes at a pressure of 1333 Pa (10 mm of Hg) to remove entrapped air.

(B) Hydroquinone bis(β - hydroxyethyl)ether was dried by heating it at 115°C for 30 minutes at a pressure of 1300—2000 Pa (10—15 mm of Hg). The ether was then heated to 115°C and 26.4 parts thereof (which gave an isocyanate/hydroxyl mole ratio of 1.05/1) were quickly added, with rapid stirring, to the product of (A) held at 115°C. The reaction mixture was maintained at 115°C, with stirring, until it became homogeneous.

The mixture was then poured into molds and cured as shown in Example 1.

Example 4

(A) The oligomeric cyclic ether content of a THF/PO polymerizate having a PO content of 33% was reduced to 0.4% by passing it through a 5 cm wiped-film molecular still at a temperature of 195°C and a pressure of about 67 Pa (0.5 mm of Hg). The resulting polymerizate had a number average molecular weight of 1220. This polymerizate, 109.9 parts, was charged to a polymerization kettle and dried by heating it at 80°C for 30 minutes at a pressure of 1300—2000 Pa (10—15 mm of Hg).

The dried polymerizate was then heated to 80°C and held at that temperature while 72.5 parts of melted, filtered diphenylmethane - 4,4' - diisocyanate were quickly added thereto. The kettle was then purged with nitrogen and the reaction mass held at 80°C for two hours, with stirring, to give a liquid product having a free isocyanate content of 7.92%, as determined by the di - n - butylamine titration technique.

This liquid product, 150 parts, was then heated at 80°C for 30 minutes at a pressure of 1333 Pa (10 mm of Hg) to remove entrapped air.

(B) 1,4 - Butanediol, 12.1 parts (which gave an isocyanate/hydroxyl mole ratio of 1.05/1), was heated to 70°C and then quickly added, with rapid stirring, to the product of (A) held at 80°C. The reaction mixture was maintained at 80°C, with stirring, until it became homogeneous.

The mixture was then poured into molds and cured as shown in Example 1.

Example 5

(A) The oligomeric cyclic ether content of a THF/EO polymerizate having an EO content of 34% was reduced to 0.6% by passing it through a 5 cm wiped-film molecular still at a temperature of 175°C and a pressure of 53 Pa (0.4 mm of Hg). The number average molecular weight of the resulting polymerizate was 1000. This polymerizate, 100 parts, was then charged to a polymerization kettle and dried by heating it at 80°C for 30 minutes at a pressure of 1300—2000 Pa (10—15 mm of Hg).

The dried polymerizate was then heated to 125°C and held at that temperature while 52.4 parts of dicyclohexylmethane - 4,4' - diisocyanate were quickly added thereto. The kettle was then purged with nitrogen and the reaction mass held at 125°C for four hours, with stirring,

to give a liquid product having a free isocyanate content of 5.43%, as determined by the di - n - butylamine titration technique.

This liquid product, 140 parts, was then heated to 100°C for 30 minutes at a pressure of 1333 Pa (10 mm of Hg) to remove entrapped air.

(B) p,p' - methylene dianiline, 17.9 parts (which gave an isocyanate/amine mole ratio of 1/1), was heated to 100°C and then quickly added, with rapid stirring, to the product of (A) held at 100°C. The reaction mixture was maintained at 100°C, with stirring, until it became homogeneous.

The mixture was then poured into molds and cured as shown in Example 1.

Industrial applicability

The polyurethanes of the invention can be used in any application where polyurethanes of this general type are employed, but are of special benefit in fabricating articles which, in use, are exposed to high temperatures, water or organic liquids. They are of particular benefit in fabricating elastomers (especially tires), spandex fibers, flexible and rigid foams, coatings (both solvent-based and water-based) and adhesives.

**Claims**

1. A polyurethane which is the reaction product of

(A) a polymerizate of tetrahydrofuran and an alkylene oxide whose ring contains two or three carbon atoms, the polymerizate containing no more than 3%, by weight, of oligomeric cyclic ethers;
(B) an organic polyisocyanate; and
(C) a chain extender which is an aliphatic polyol or a polyamine.

2. The polyurethane of claim 1 wherein the polymerizate in (A) contains no more than 1%, by weight, of oligomeric cyclic ethers.

3. The polyurethane of claim 1 wherein the polymerizate in (A) is of THF and ethylene oxide.

4. The polyurethane of claim 1 wherein the polyisocyanate in (B) is diphenylmethane - 4,4' - diisocyanate or a toluene diisocyanate.

5. The polyurethane of claim 1 wherein the chain extender in (C) is 1,4 - butanediol; p,p' - methylene dianiline and complexes thereof with alkali metal chlorides, bromides, iodides, nitrites and nitrates; 4,4' - methylene bis(2 - chloroaniline) or 1,3 - propanediol bis(p - aminobenzoate).

6. A polyurethane which is the reaction product of

(A) a polymerizate of tetrahydrofuran and ethylene oxide, the polymerizate containing no more than 1%, by weight, of oligomeric cyclic ethers;
(B) diphenylmethane - 4,4' - diisocyanate; and
(C) 1,4 - butanediol.

7. In a process for preparing a polyurethane, the process comprising bringing together, under conditions suitable for reaction

(A) a polymerizate of tetrahydrofuran and an alkylene oxide whose ring contains two or three carbon atoms;
(B) an excess over the stoichiometric amount of an organic polyisocyanate; and
(C) an amount of an aliphatic polyol or a polyamine calculated to give an isocyanate/hydroxyl or amine mole ratio of 0.9—1.1 to 1,

the improvement comprising use of a tetrahydrofuran/alkylene oxide polymerizate which contains no more than 3%, by weight, of oligomeric cyclic ethers.

8. The process of claim 7 wherein reactants (A) and (B) are brought together first, and reactant (C) and the product of reactants (A) and (B) are then brought together.

9. An article cast from the polyurethane of claim 1.

10. A fiber spun from the polyurethane of claim 1.

11. A polymerizate suitable in a process according to claims 7 or 8 containing a copolymer of tetrahydrofuran and ethylene oxide, the copolymer containing 2—70%, by weight, of ethylene oxide units and having a number average molecular weight of 500—5000 and a hydroxyl functionality of 2.0—4.0, the polymerizate containing no more than 3%, by weight, of oligomeric cyclic ethers.

12. The polymerizate of claim 11 containing no more than 2%, by weight, of oligomeric cyclic ethers.

13. The polymerizate of claim 11 containing no detectable oligomeric cyclic ethers.

14. The polymerizate of claim 11 wherein the copolymer contains 30—50%, by weight, of ethylene oxide units, has a number average molecular weight of 650—2000 and a hydroxyl functionality of 2.0.

15. A method for producing the polymerizate of claim 11, the method comprising extracting oligomeric cyclic ethers from a raw polymerizate with water, said polymerizate containing a copolymer containing 2—70%, by weight, of ethylene oxide units and having a number average molecular weight of 500—5000 and a hydroxyl functionality of 2.0—4.0, until the polymerizate contains no more than 3%, by weight, of oligomeric cyclic ethers.

16. The method of claim 15, in which, before the water extraction is performed, the raw polymerizate is distilled until its oligomeric cyclic ether content is 5%, by weight.

**Revendications**

1. Un polyuréthane qui est le produit de réaction de

(A) un produit de polymérisation de tétrahydrofuranne et d'un oxyde d'alcoylène dont le noyau contient deux ou trois atomes de carbone, le produit de polymérisation ne contenant pas plus de 3% en poids d'éthers cycliques oligomères;
(B) un polyisocyanate organique; et
(C) un agend d'allongement de chaîne qui est un polyol aliphatique ou une polyamine.

2. Le polyuréthane selon la revendication 1 dans lequel le produit de polymérisation en (A) ne contient pas plus de 1% en poids d'éthers cycliques oligomères.

3. Le polyuréthane de la revendication 1 dans lequel le produit de polymérisation en (A) est dérivé de THF et d'oxyde d'éthylène.

4. Le polyuréthane selon la revendication 1 dans lequel le polyisocyanate en (B) est du diphénylméthane - 4,4' - diisocyanate ou un toluène diisocyanate.

5. Le polyuréthane selon la revendication 1 dans lequel l'agent d'allongement de chaîne en (C) est du 1,4 - butanediol; la p,p' - méthylène dianiline et ses complexes avec des chlorures, bromures, iodures, nitrites et nitrates de métaux alcalins; la 4,4' - méthylène bis (2 - chloroaniline) ou le 1,3 - propanediol bis(p - aminobenzoate).

6. Un polyuréthane qui est le produit de réaction de:

(A) un produit de polymérisation de tétrahydrofuranne et d'oxyde d'éthylène, le produit de polymérisation ne contenant pas plus de 1% en poids d'éthers cycliques oligomères;
(B) du diphénylméthane - 4,4' - diisocyanate; et
(C) du 1,4 - butanediol.

7. Dans un procédé pour la préparation d'un polyuréthane selon lequel on met en présence, dans des conditions convenables pour réaction

(A) un produit de polymérisation de tétrahydrofuranne et d'un oxyde d'alcoylène dont le noyau contient deux ou trois atomes de carbone;
(B) un excès d'un polyisocyanate organique, par rapport à la quantité stoechiométrique; et
(C) un quantité d'un polyol aliphatique ou d'une polyamine calculée de manière à donner un rapport molaire isocyanate/hydroxyle ou amine de 0,9 à 1,1 pour 1,

le perfectionnement selon lequel on utilise un produit de polymérisation tétrahydrofuranne/oxyde d'alcoylène qui ne contient pas plus de 3% en poids d'éthers cycliques oligomères.

8. Le procédé selon la revendication 7 dans lequel les corps en réaction (A) et (B) sont d'abord mis en contact mutuel, et ensuite on met en contact le corps en réaction (C) et le produit des corps en réaction (A) et (B).

9. Un article coulé à partir du polyuréthane de la revendication 1.

10. Une fibre filée à partir du polyuréthane de la revendication 1.

11. Un produit de polymérisation utilisable dans un procédé selon les revendications 7 ou 8 contenant un copolymère de tétrahydrofuranne et d'oxyde d'éthylène, le copolymère contenant de 2 à 70% en poids de mailles d'oxyde d'éthylène et ayant un poids moléculaire moyen en nombre de 500 à 5000 et une fonctionnalité hydroxyle de 2,0 à 4,0, le produit de polymérisation ne contenant pas plus de 3% en poids d'éthers cycliques oligomères.

12. Le produit de polymérisation selon la revendication 11 ne contenant pas plus de 2% en poids d'éthers cycliques oligomères.

13. Le produit de polymérisation selon la revendication 11 ne contenant pas d'éthers cycliques oligomères détectables.

14. Le produit de polymérisation selon la revendication 11 dans lequel le copolymère contient de 30 à 50% en poids de mailles d'oxyde d'éthylène, a un poids moléculaire moyen en nombre de 650 à 2000 et une fonctionnalité hydroxyle de 2,0.

15. Un procédé pour produire le produit de polymérisation de la revendication 11, selon laquelle on extrait les éthers cycliques oligomères d'un produit de polymérisation brut au moyen d'eau, ce produit de polymérisation contenant de 2 à 70% en poids de mailles d'oxydes d'éthylène et ayant un poids moléculaire moyen en nombre de 500 à 5000 et une fonctionnalité hydroxyle de 2,0 à 4,0, jusqu'à ce que le produit de polymérisation ne contienne pas plus de 3% en poids d'éthers cycliques oligomères.

16. Le procédé selon la revendication 15, dans lequel, avant d'effectuer l'extraction par l'eau, on distille le produit de polymérisation brut jusqu-à ce que sa teneur en éthers cycliques oligomères soit de 5% en poids.

**Patentansprüche**

1. Polyurethan, bei dem es sich um das Reaktionsprodukt handelt von

(A) einem Polymerisat von Tetrahydrofuran und einem Alkylenoxid, dessen Ring 2 oder 3 Kohlenstoffatome enthält, wobei das Polymerisat nicht mehr als 3 Gew.-% oligomerer cyclischer Äther enthält;
(B) einem organischen Polyisocyanat; und

(C) einem Kettenverlängerungsmittel, bei dem es sich um ein aliphatisches Polyol order ein Polyamin handelt.

2. Polyurethan nach Anspruch 1, worin das Polymerisat in (A) nicht mehr als 1 Gew.-% oligomerer cyclischer Äther enthält.

3. Polyurethan nach Anspruch 1, worin das Polymerisat in (A) von THF und Äthylenoxid ist.

4. Polyurethan nach Anspruch 1, worin das Polyisocyanat in (B) Diphenylmethan - 4,4' - diisocyanat oder ein Toluoldiisocyanat ist.

5. Polyurethan nach Anspruch 1, worin das Kettenverlängerungsmittel in (C) 1,4 - Butandiol; p,p' - Methylendianilin un Komplexe davon mit Alkalimetallchloriden, -bromiden, -iodiden, -nitriten und -nitraten; 4,4' - Methylen - bis(2 - chloranilin) oder 1,3 - Propandiol - bis(p - aminobenzoate) ist.

6. Polyurethan, bei dem es sich um das Reaktionsprodukt handelt von

(A) einem Polymerisat von Tetrahydrofuran und Äthylenoxid, wobei das Polymerisat nicht mehr als 1 Gew.-% oligomerer cyclischer Äther enthält;
(B) Diphenylmethan - 4,4' - diisocyanat; und
(C) 1,4 - Butandiol.

7. Verfahren zur Herstellung eines Polyurethans, bei welchem unter zur Reaktion geeigneten Bedingungen

(A) ein Polymerisat von Tetrahydrofuran und einem Alkylenoxid, dessen Ring 2 oder 3 Kohlenstoffatome enthält;
(B) ein Überschuss über die stöchiometrische Menge eines organischen Polyisocyanats; und
(C) eine Menge eines aliphatischen Polyols oder eines Polyamins, berechnet zur Bildung eines Isocyanat/Hydroxyl- oder Amin-Molverhältnisses von 0,9—1,1 zu 1,

zusammengebracht werden, das verbessert ist durch Anwendung eines Tetrahydrofuran/Alkylenoxidpolymerisats, das nicht mehr als 3 Gew.-% oligomerer cyclischer Äther enthält.

8. Verfahren nach Anspruch 7, bei dem die Reaktionskomponenten (A) und (B) zuerst zusammengebracht werden und die Reaktionskomponente (C) und das Produkt der Reaktionskomponenten (A) und (B) anschließend zusammengebracht werden.

9. Aus dem Polyurethan nach Anspruch 1 gegossener Gegenstand.

10. Aus dem Polyurethan nach Anspruch 1 gesponnene Faser.

11. Polymerisat, geeignet in einem Verfahren nach den Ansprüchen 7 oder 8, enthaltend ein Copolymeres von Tetrahydrofuran und Äthylenoxid, wobei das Copolymere 2—70 Gew.-% Äthylenoxideinheiten aufweist, und ein zahlenmittleres Molekulargewicht von 500—5000 und eine Hydroxyl-Funktionalität von 2,0—4,0 aufweist und das Polymerisat nicht mehr als 3 Gew.-% oligomerer cyclischer Äther enthält.

12. Polymerisat nach Anspruch 11, enthaltend nicht mehr als 2 Gew.-% oligomerer cyclischer Äther.

13. Polymerisat nach Anspruch 11, das keine feststellbaren oligomeren cyclischen Äther enthält.

14. Polymerisat nach Anspruch 11, in dem das Copolymere 30—50 Gew.-% Äthylenoxideinheiten enthält, ein zahlenmittleres Molekulargewicht von 650—2000 und eine Hydroxyfunktionalität von 2,0 hat.

15. Verfahren zur Herstellung des Polymerisats nach Anspruch 11, bei welchem oligomere cyclische Äther aus einem Rohpolymerisat mit Wasser extrahiert werden, wobei das Polymerisat ein Copolymeres, das 2—70 Gew.-% Äthylenoxideinheiten enthält und ein zahlenmittleres Molekulargewicht von 500—5000 und eine Hydroxylfunktionalität von 2,0—4,0 hat, enthält; bis das Polymerisat nicht mehr als 3 Gew.-% oligomerer cyclischer Äther enthält.

16. Verfahren nach Anspruch 15, bei dem vor der Durchführung der Wasserextraktion das rohe Polymerisat destilliert wird, bis sein Gehalt an oligomerem cyclischen Äther 5 Gew.-% beträgt.